# EUROPEAN PATENT SPECIFICATION

(11) **EP 3 188 280 B1**
(45) Date of publication and mention of the grant of the patent: **29.01.2020**
(21) Application number: 16207525.3
(22) Date of filing: 30.12.2016
(51) Int. Cl.: H01M 2/04, H01M 2/12, H01M 2/34, H01M 2/22

(54) **CAP ASSEMBLY AND SECONDARY BATTERY INCLUDING THE SAME**
DECKELANORDNUNG UND SEKUNDÄRBATTERIE DAMIT
ENSEMBLE DE CAPOT ET BATTERIE SECONDAIRE LE COMPRENANT

(30) Priority: 04.01.2016 KR 20160000515
(43) Date of publication of application: 05.07.2017
(73) Proprietor: Samsung SDI Co., Ltd, Gyeonggi-do 17084 (KR)
(72) Inventor: KIM, Dae Kyu, 17084 Gyeonggi-do (KR)
(74) Representative: Mounteney, Simon James

(56) References cited:
- EP-A1- 2 197 064
- EP-A1- 2 930 764
- CN-U- 201 508 864
- US-A1- 2011 183 172
- US-A1- 2015 086 847

## Description

### CROSS-REFERENCE TO RELATED APPLICATION

### BACKGROUND

### 1. Field

One or more embodiments of the invention relate to a cap assembly having a novel structure that may increase output power by reducing a resistance of a battery and a secondary battery including the cap assembly.

### 2. Description of the Related Art

Secondary batteries that may be charged and discharged and thus may be repeatedly used are used as energy sources of mobile electronic devices, power tools, garden tools, electric vehicles (EVs), power storage systems, etc., and applications in more various devices are sought for.

Power tools, garden tools, EVs, E-bikes, etc. using secondary batteries are recently requested to have more output power.

Cylindrical secondary batteries are generally used in the above applications. However, since a cylindrical secondary battery has a fixed available volume, it is difficult to increase capacity and output power.

In order to increase output power, a resistance of a battery has to be reduced, and to this end, the number of tabs of electrode plates in a limited volume has to be increased. However, when the number of tabs is increased, there are many limits to performing a process of welding the tabs to a current interrupt device (CID) or a can.

EP 2 197 064 A1 discloses a cap assembly according to the preamble of Claim 1.

CN 201 508 864 U discloses battery cap assembly in which a base plate comprises a stepped concave portion developing upward from the bottom surface of the plate.

US 2011/183172 A1 discloses a sealed battery cell provided with a cap assembly.

US 2015/086847 A1 discloses a vent member for a secondary battery comprising of a protrusion that is arranged to move in response to a predetermined pressure. EP2930764 describes a rechargeable battery including: an electrode assembly through which charging and discharging operations are performed; a case accommodating the electrode assembly and electrically connected to a first electrode of the electrode assembly; and a cap assembly combined to an opening of the case while interposing a gasket and being electrically connected to a second electrode of the electrode assembly. The cap assembly includes: a vent plate electrically connected to a cap plate; a middle plate separated from the vent plate, penetrated through a through-hole by a vent protruding from the vent plate, and electrically connected to the second electrode; an insulator interposed between the vent plate and the middle plate; and a sub-plate electrically connecting the vent with the middle plate. At least one of the vent plate and the middle plate is formed with protrusions and grooves facing the insulator such that the protrusions and the grooves are correspondingly combined to corresponding grooves and corresponding protrusions of the insulator.

### SUMMARY

One or more embodiments of the invention set out to praise a cap assembly having a novel structure that may reduce a resistance of a battery and increase output power and a secondary battery including the cap assembly.

Additional aspects will be set forth in part in the description which follows and, in part, will be apparent from the description, or may be learned by practice of the presented embodiments.

According to the invention, a cap assembly includes the features of Claim 1. Optional features of the invention are set-out in Claims 2 to 7. A further aspect of the invention provides a secondary battery as set-out in Claim 8.

### BRIEF DESCRIPTION OF THE DRAWINGS

Aspects of the invention will become apparent and more readily appreciated from following description of embodiments thereof, taken in conjunction with the accompanying drawings in which:
FIG. 1 is a perspective view illustrating an outer appearance of a secondary battery according to an embodiment of the invention;
FIG. 2 is an exploded perspective view of FIG. 1;
FIG. 3 is a cross-sectional view taken along line I-I' of FIG. 1;
FIG. 4 is a partial enlarged view of FIG. 3 for explaining a connection relationship between a cap assembly and a plurality of first electrode tabs according to an embodiment of the invention;
FIG. 5A is an enlarged view illustrating a portion A of FIG. 4;
FIG. 5B is a view illustrating a state where the plurality of first electrode tabs are separated from the cap assembly of FIG. 5A for convenience of explanation;
FIG. 6 is a bottom view of the cap assembly to which the plurality of first electrode tabs are connected according to an embodiment of the invention; and
FIG. 7 is a partial cross-sectional view of a cap assembly according to a comparative example.

### DETAILED DESCRIPTION

Expressions such as "at least one of" when preceding a list of elements, modify the entire list of elements and do not modify the individual elements of the list.

The inventive concept will now be described more fully with reference to the accompanying drawings, in which embodiments thereof are shown.

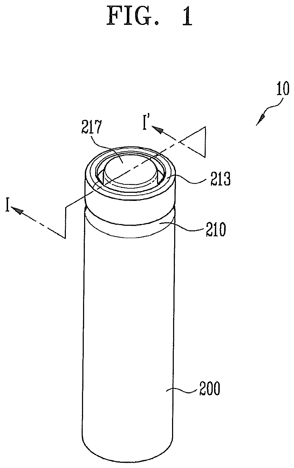

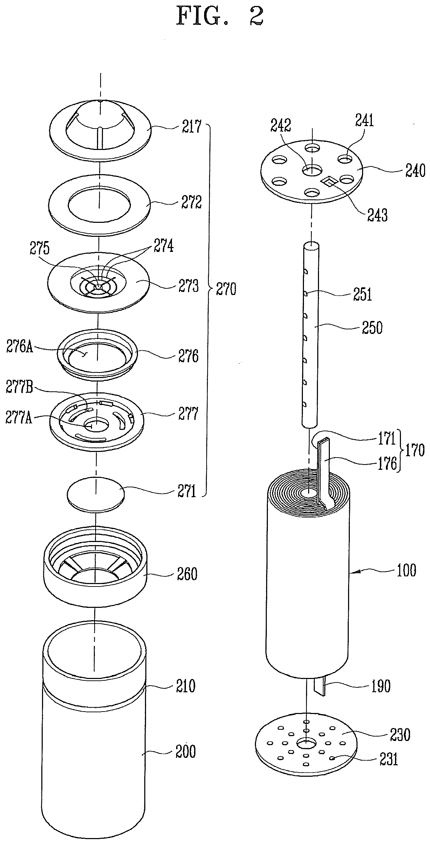

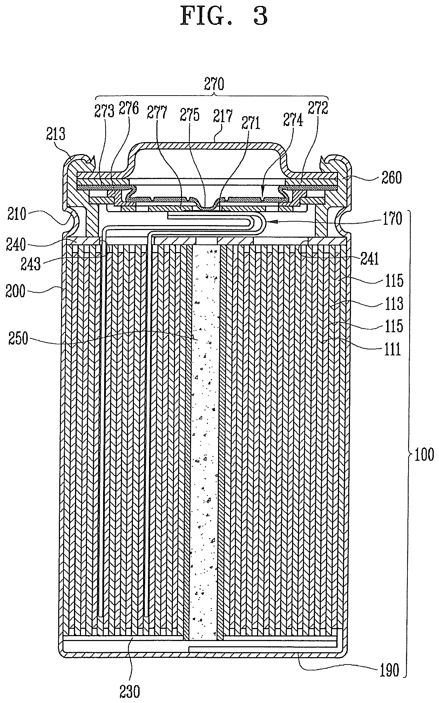

FIG. 1 is a perspective view illustrating an outer appearance of a secondary battery 10 according to an embodiment of the invention. FIG. 2 is an exploded perspective view of FIG. 1. FIG. 3 is a cross-sectional view taken along line I-I' of FIG. 1.

As shown in FIGS. 1 through 3, the secondary battery 10 according to an embodiment of the invention includes an electrode assembly 100, a can 200 in which the electrode assembly 100 is received, a plurality of insulating plates 230, 240, a center pin 250, a gasket 260, and a cap assembly 270 that seals the can 200 along with the gasket 260.

First, the electrode assembly 100 includes first and second electrodes 113 and 111 and a separator 115, and the separator 115 is located between the first and second electrodes 113 and 111. The first electrode 113 and the second electrode 111 have opposite polarities, and when one of the first electrode 113 and the second electrode 111 is a positive electrode, the other electrode is a negative electrode. The first electrode 113, the separator 115, and the second electrode 111 are sequentially stacked and then are rolled.

The electrode assembly 100 includes a plurality of first electrode tabs 170 that are electrically connected to the first electrode 113 and one second electrode tab 190 that is electrically connected to the second electrode 111.

Energy generated in the electrode assembly 100 is transferred to the outside through the first and second electrode tabs 170 and 190. Each of the first electrode tabs 170 and the second electrode tab 190 includes a conductive material, for example, nickel (Ni) or a nickel alloy. Although only one first electrode may be provided, since the cap assembly 270 according to an embodiment may be more efficiently applied to a multi-tab structure including a plurality of first electrode tabs, the following will be explained on the assumption that the secondary battery 10 includes multi-tabs for convenience of explanation.

The can 200 has a cylindrical shape whose one end is open and that has a central space in which the electrode assembly 100 is received. The second electrode tab 190 may be welded to a bottom surface of the can 200, and thus the can 200 may function as an electrode terminal. The can 200 may be formed of, for example, but not limited to, stainless steel, aluminum, or an equivalent thereof.

The plurality of insulating plates 230, 240 include a first insulating plate 240 that is provided on a portion of the electrode assembly 100 that faces an opening of the can 200 and a second insulating plate 230 that is provided on a portion of the electrode assembly 100 that faces a surface, that is, the bottom surface, of the can 200 that is opposite to the opening of the can 200. An unnecessary electrical short-circuit between the electrode assembly 100 and the can 200 is prevented due to the first and second insulating plates 240 and 230.

The first insulating plate 240 may have a plurality of holes 241 through which an electrolytic solution is smoothly injected into the electrode assembly 100. The first insulating plate 240 may have a hole 243 through which the plurality of first electrode tabs 170 drawn from the electrode assembly 100 pass.

Since the second insulating plate 230 includes a plurality of holes 231 and thus a space reduced due to the second insulating plate 230 is minimized, a reduction in the injected electrolytic solution may be minimized.

The center pin 250 is provided at the center of the electrode assembly 100 to prevent the electrode assembly 100 from loosening. The center pin 250 may have a circular rod shape in which a hollow portion is formed, and one end of the center pin 250 may press downward the second electrode tab 190 so that the second electrode tab 190 is closely attached to the can 200.

Since the hollow portion is formed in the center pin 250, gas generated from the electrode assembly 100 may flow through the hollow portion. A hole 242 is formed at the center of the first insulating plate 240 to correspond to the center pin 250, and gas is discharged through the hole 242.

A plurality of holes 251 may be formed in a side surface of the center pin 250 in order to facilitate impregnation of the electrolytic solution and discharge of gas generated from the electrode assembly 100.

A clamping portion 213 that is curved inward is formed along an edge of the opening of the can 200. The clamping portion 213 clamps the cap assembly 270 to increase a fastening force.

The can 200 includes a bead 210 that is curved inward between the opening and the electrode assembly 100 to be concave. An inner diameter of the bead 210 is less than an outer diameter of the electrode assembly 100, and thus the electrode assembly 100 is fixed in order not to move in the can 200.

The cap assembly 270 includes a cap plate 217 that functions as an electrode terminal and a current interrupt device (CID) that is provided between the cap plate 217 and the electrode assembly 100. The CID includes a positive temperature coefficient element 272, a vent plate 273, an insulator 276, a middle plate 277, and a sub-plate 271 that are sequentially stacked from the cap plate 217 toward the electrode assembly 100.

The positive temperature coefficient element 272 cuts off over-current.

A vent 275 is provided at the center of the vent plate 273. The vent 275 protrudes downward toward a through-hole 276A that is formed at the center of the insulator 276 and a through-hole 277A that is formed at the center of the middle plate 277. The vent 275 may contact the sub-plate 271 through the through-holes 276A and 277A.

The middle plate 277 includes through-holes 277B through which pressure is applied to the vent plate 273 when internal pressure of the secondary battery 10 is increased.

Also, the middle plate 277 is electrically connected to the vent plate 273 through the sub-plate 271.

The sub-plate 271 is closely attached to the middle plate 277 between the electrode assembly 100 and the middle plate 277 to close the through-hole 277A of the middle plate 277. The sub-plate 271 may be electrically connected to the vent 275 of the vent plate 273 by using a welding or the like.

The vent plate 273 and the middle plate 277 are insulated from each other due to the insulator 276 that is provided between the vent plate 273 and the middle plate 277.

Circular and cross-shaped grooves 274 are formed around the vent 275 of the vent plate 273. The vent 275 of the vent plate 273 moves toward the cap plate 217 when gas is generated in the secondary battery 10 and pressure is increased. As the vent plate 273 is deformed in this manner, the sub-plate 271 and the vent 275 are separated from each other as bonding area therebetween is broken or a part of the sub-plate 271 is broken, thereby interrupting the flow of current. When pressure of the secondary battery 10 is continuously increased, the grooves 274 are fractured and gas is discharged to the outside.

The gasket 260 seals a space between the opening of the can 200 and the cap assembly 270. The gasket 260 surrounds an outer circumferential surface of the cap assembly 270 and insulates the cap plate 217, etc. from the can 200. The gasket 260 is formed of an insulating elastic material.

The plurality of first electrode tabs 170 are drawn from a plurality of portions of the electrode assembly 100 of the secondary battery 10 and are electrically connected to one another. Any one of the plurality of first electrode tabs 170 is electrically connected to the sub-plate 271 or the middle plate 277. Even in this case, a method such as welding may be used. Accordingly, a current path from the electrode assembly 100 to the cap plate 217 that is an uppermost end is formed.

In this case, since the middle plate 277 according to an embodiment includes a receiving recess 277C in which the sub-plate 271 is received, a height increment due to a thickness of the sub-plate 271 that inevitably occurs in a CID structure in which the sub-plate 271 is located under the middle plate 277 is eliminated. Accordingly, as described below, the secondary battery 10 having a cylindrical shape and a limited available volume may ensure high capacity and high output power and welding defects between the cap assembly 270 and the first electrode tabs 170 of the electrode assembly 100 may be reduced.

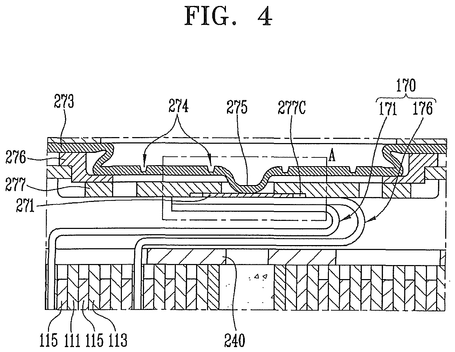

The inventive concept will now be explained in more detail with reference to FIGS. 4 through 7 along with FIGS. 1 through 3.

FIG. 4 is a partial enlarged view of FIG. 3 for explaining a connection relationship between the cap assembly 270 and the plurality of first electrode tabs 170 according to an embodiment.

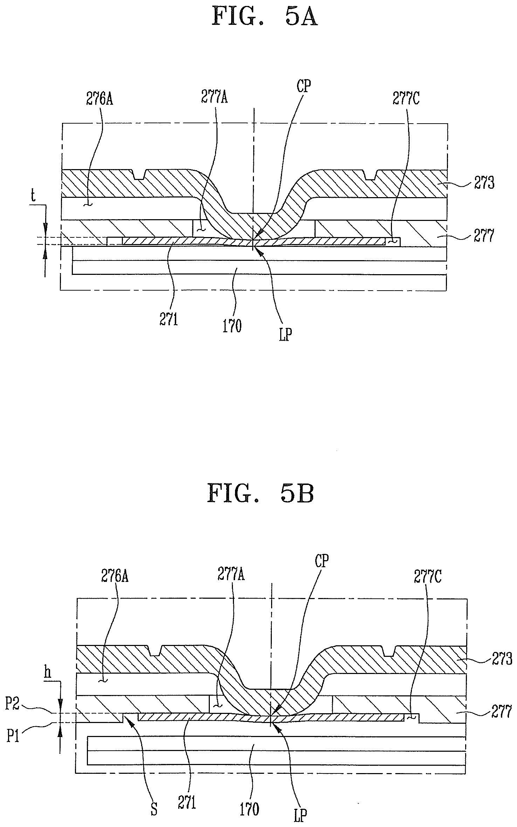

FIG. 5A is an enlarged view illustrating a portion A of FIG. 4. FIG. 5B is a view illustrating a state where the plurality of first electrode tabs 170 are separated from the cap assembly 270 of FIG. 5A for convenience of explanation.

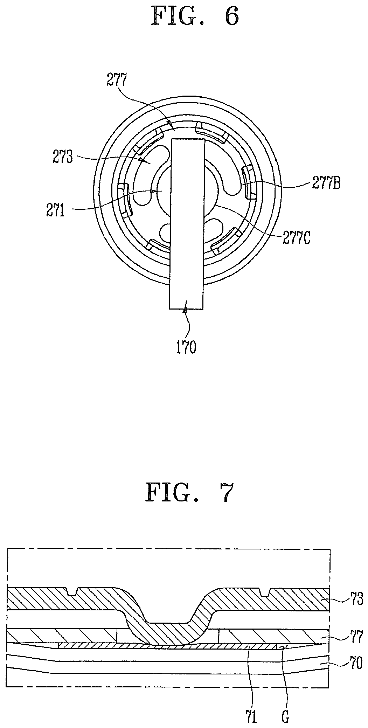

Also, FIG. 6 is a bottom view of the cap assembly 270 to which the plurality of first electrode tabs 170 are connected according to an embodiment.

First, as shown in FIG. 4, the cap assembly 270 includes the vent plate 273 that is located under the cap plate 217, includes the vent 275, and is deformed when internal pressure of the secondary battery 10 is increased, the sub-plate 271 that is located under the vent plate 273, is adhered to the vent 275, and constitutes a CID along with the vent plate 273, the middle plate 277 that is located between the vent plate 273 and the sub-plate 271 and is electrically connected to the vent plate 273 through the sub-plate 271, and the insulator 276 that is located between the vent plate 273 and the middle plate 277.

The plurality of first electrode tabs 170 include an inner tab 171 that is located relatively close to a central axis of the electrode assembly 100 and an outer tab 176 that is located relatively far from the central axis of the electrode assembly 100. In this case, the inner tab 171 and the outer tab 176 are aligned at same side of the central axis of the electrode assembly 100 so that portions of the inner tab 171 and the outer tab 176 that extend outward from the electrode assembly 100 overlap each other.

The plurality of first electrode tabs 170 that are aligned are connected to the cap assembly 270, and are adhered to both the sub-plate 271 and the middle plate 277 in order to minimize an internal resistance of the secondary battery 10. That is, the plurality of first electrode tabs 170 drawn from the electrode assembly 100 are located under the sub-plate 271 and the middle plate 277 and are adhered to both the sub-plate 271 and the middle plate 277, and thus the electrode assembly 100 is electrically connected to the vent plate 273.

In this case, the middle plate 277 according to an embodiment includes the receiving recess 277C in which the sub-plate 271 is received.

In more detail, referring to FIGS. 5A and 5B, the receiving recess 277C of the middle plate 277 may have a concave shape upward from a bottom surface of the middle plate 277.

The receiving recess 277C may have a size corresponding to a size of the sub-plate 271 in order to receive the sub-plate 271. However, for convenience of explanation, a size of the receiving recess 277C is slightly exaggerated as being greater than that of the sub-plate 271.

In more detail, a height 'h' of the receiving recess 277C is equal to or greater than a thickness 't' of the sub-plate 271 so that the sub-plate 271 located under the middle plate 277 is completely received in the receiving recess 277C of the middle plate 277.

In other words, the middle plate 277 may include a stepped portion S that connects a bottom surface P1 to a top surface P2 of the receiving recess 277C and a height 'h' of the stepped portion S may be equal to or greater than the thickness 't' of the sub-plate 271 so that the sub-plate 271 is completely received in the receiving recess 277C of the middle plate 277 and there is no portion of the sub-plate 271 extending beyond the middle plate 277.

The sub-plate 271 is closely attached to the top surface P2 of the receiving recess 277C to close the through-hole 277A of the middle plate 277.

As such, since the bottom of the cap assembly 270 is entirely flat, as shown in FIG. 6, the plurality of first electrode tabs 170 that are located under the sub-plate 271 and the middle plate 277 and are adhered to both the sub-plate 271 and the middle plate 277 may be more closely attached to the sub-plate 271 and the middle plate 277.

As an adhesive force increases, a contact area between the plurality of first electrode tabs 170 and the sub-plate 271 and the middle plate 277 may increase and an internal resistance of the secondary battery 10 may decrease, thereby reducing welding defects between the plurality of first electrode tabs 170 and the sub-plate 271 and the middle plate 277.

Since the height 'h' of the receiving recess 277C is greater than the thickness 't' of the sub-plate 271, the vent 275 may protrude into the receiving recess 277C through the through-hole 276A of the insulator 276 and the through-hole 277A of the middle plate 277 by a length corresponding to greater height 'h' of receiving recess 277C than the thickness 't' of the sub-plate 271. In this case, the vent 275 is adhered to the sub-plate 271 in the receiving recess 277C.

That is, the through-hole 276A of the insulator 276, the through-hole 277A of the middle plate 277, and the receiving recess 277C of the middle plate 277 communicate with one another, and the vent 275 is adhered to the sub-plate 271 through the through-hole 276A of the insulator 276, the through-hole 277A of the middle plate 277, and the receiving recess 277C of the middle plate 277.

Even in this case, since the sub-plate 271 is completely received without extending beyond the middle plate 277, the plurality of first electrode tabs 170 may be closely attached to the sub-plate 271 and the middle plate 277 that constitute a bottom surface of the cap assembly 270.

As described above, since the through-hole 276A of the insulator 276, the through-hole 277A of the middle plate 277, and the receiving recess 277C of the middle plate 277 communicate with one another, the sub-plate 271 includes a contact portion CP that contacts the vent 275 and a bottom portion LP that is opposite to the contact portion CP, and at least one of the contact portion CP and the bottom portion LP is located in the receiving recess 277C of the middle plate 277.

FIG. 7 is a partial cross-sectional view of a cap assembly according to a comparative embodiment to the present invention.

As shown in FIG. 7, when an electrode tab 70 is adhered to both a sub-plate 71 and a middle plate 77, a gap G may be formed between the middle plate 77 and the electrode tab 70 due to a thickness of the sub-plate 71. This is because a bent portion is formed due to the thickness of the sub-plate 71 in a process of closely attaching the electrode tab 70 to the sub-plate 71 and the middle plate 77 during welding.

Although a thickness of the gap G varies according to a type of a secondary battery, the thickness of the gap G ranges from about 0.13 mm to about 0.15 mm in a general cylindrical secondary battery.

The gap G formed by the electrode tab 70 and the sub-plate 71 and the middle plate 77 reduces a contact area between the electrode tab 70 and the sub-plate 71 and the middle plate 77, thereby making it difficult to reduce an internal resistance of the secondary battery.

However, in a cap assembly having a novel structure according to an embodiment of the present invention, since an electrode tab is closely attached to a sub-plate and a middle plate, an internal resistance of a secondary battery may be reduced and the demand that a cylindrical secondary battery having a limited available volume should have high capacity and high output power may be met. Also, welding defects between the electrode tab and the sub-plate and the middle plate are reduced.

In particular, in a multi-tab structure used to increase output power of a secondary battery, since a plurality of electrode tabs are provided, the flexibility of the electrode tabs is reduced. In a structure shown in FIG. 7, it is difficult to closely attach the electrode tabs to a sub-plate and a middle plate (that is, a gap G formed between the electrode tabs and the sub-plate and the middle plate may be further increased). In the cap assembly according to an embodiment, however, since a height increment due to a thickness of the sub-plate is completely eliminated by a receiving recess of the middle plate, the electrode tab may be easily closely attached to the sub-plate and the middle plate. Accordingly, a multi-tab structure may be used without a risk of increasing a resistance of the secondary battery, and welding defects between the cap assembly and the electrode tab may be reduced.

According to the inventive concept, a cap assembly having a novel structure that may reduce a resistance of a battery and increase output power may be provided.

Also, according to the inventive concept, a multi-tab structure may be used without a risk of increasing a resistance of the battery.

Also, according to the inventive concept, welding defects between the cap assembly and an electrode tab of an electrode assembly may be reduced.

While the inventive concept has been particularly shown and described with reference to embodiments thereof, they are provided for the purposes of illustration and it will be understood by one of ordinary skill in the art that various modifications and equivalent other embodiments may be made within the scope of the inventive concept. Therefore, the scope of the inventive concept is defined not by the detailed description of the inventive concept but by the appended claims.

## Claims

1. A cap assembly (270) comprising:
a cap plate (217);
a vent plate (273) located under the cap plate (217), comprising a vent (275) that protrudes downward, and is configured to be deformed when internal pressure of a secondary battery is increased;
a sub-plate (271) located under the vent plate (273), adhered to the vent (275), and constituting a current interrupt device (CID) along with the vent plate (273);
a middle plate (277) located between the vent plate (273) and the sub-plate (271) and electrically connected to the vent plate (273) through the sub-plate (271); and
an insulator (276) located between the vent plate (273) and the middle plate (277);
**characterised in that** the middle plate (277) comprises a receiving recess (277 C) in which the sub-plate (271) is completely received such that an electrode tab (170, 190) drawn from an electrode assembly (100) of the secondary battery and located under the sub-plate (271) and the middle plate (277) can be adhered to both the sub-plate (271) and the middle plate (277) and electrically connected to the vent plate (273).

2. A cap assembly according to claim 1, wherein the receiving recess (277 C) has a concave shape upward from a bottom surface of the middle plate (277).

3. A cap assembly according to claim 2, wherein the middle plate (277) comprises a stepped portion (S) that connects the bottom surface of the middle plate (277) to a top surface of the receiving recess (277 C),
wherein a height of the stepped portion (S) is equal to or greater than a thickness of the sub-plate (271).

4. A cap assembly according to claim 3, wherein the sub-plate (271) is closely attached to the top surface of the receiving recess (277 C).

5. A cap assembly according to any preceding claim, wherein a height of the receiving recess (277 C) is equal to or greater than a thickness of the sub-plate (271).

6. A cap assembly according to any preceding claim, wherein each of the insulator (276) and the middle plate (277) comprises a through-hole,
wherein the vent (275) passes through the through-hole of the insulator (276) and the through-hole of the middle plate (277) and is adhered to the sub-plate (271).

7. A cap assembly according to any preceding claim, wherein the electrode tab (170, 190) is a multi-tab structure comprising a plurality of tabs that are drawn from a plurality of portions of the electrode assembly (100) of the secondary battery and are electrically connected to one another.

8. A secondary battery comprising the cap assembly according to any preceding claim.

## Patentansprüche

1. Kappenanordnung (270), umfassend:
eine Kappenplatte (217);
eine Entlüftungsplatte (273), die unter der Kappenplatte (217) angeordnet ist und eine Entlüftungsöffnung (275) umfasst, die nach unten ragt und dafür konfiguriert ist, verformt zu werden, wenn der Innendruck einer Sekundärbatterie erhöht wird;
eine Unterplatte (271), die unter der Entlüftungsplatte (273) angeordnet ist, an die Lüftung (275) geklebt ist und zusammen mit der Entlüftungsplatte (273) eine Stromunterbrechungsvorrichtung (CID) bildet;
eine Mittelplatte (277), die zwischen der Entlüftungsplatte (273) und der Unterplatte (271) angeordnet und über die Unterplatte (271) elektrisch mit der Entlüftungsplatte (273) verbunden ist; und
einen Isolator (276), der zwischen der Entlüftungsplatte (273) und der Mittelplatte (277) angeordnet ist;
**dadurch gekennzeichnet, dass** die Mittelplatte (277) eine Aufnahmeaussparung (277 C) aufweist, in welcher die Unterplatte (271) vollständig aufgenommen ist, sodass eine Elektrodenkontaktfahne (170, 190), die aus einer Elektrodenanordnung (100) der Sekundärbatterie gezogen und unter der Unterplatte (271) und der Mittelplatte (277) angeordnet wird, sowohl an der Unterplatte (271) als auch an der Mittelplatte (277) angeklebt und elektrisch mit der Entlüftungsplatte (273) verbunden werden kann.

2. Kappenanordnung nach Anspruch 1, worin die Aufnahmeaussparung (277 C) eine konkave Form aufwärts von einer Unterseite der Mittelplatte (277) aufweist.

3. Kappenanordnung nach Anspruch 2, worin die Mittelplatte (277) einen abgestuften Abschnitt (S) umfasst, der die Unterseite der Mittelplatte (277) mit einer Oberseite der Aufnahmeaussparung (277 C) verbindet,
worin eine Höhe des abgestuften Abschnitts (S) gleich oder größer als eine Dicke der Unterplatte (271) ist.

4. Kappenanordnung nach Anspruch 3, worin die Unterplatte (271) eng mit der Oberseite der Aufnahmeaussparung (277 C) verbunden ist.

5. Kappenanordnung nach einem der vorhergehenden Ansprüche, worin eine Höhe der Aufnahmeaussparung (277 C) gleich oder größer als eine Dicke der Unterplatte (271) ist.

6. Kappenanordnung nach einem der vorhergehenden Ansprüche, worin jeder des Isolators (276) und der Mittelplatte (277) ein Durchgangsloch aufweist,
worin die Entlüftungsöffnung (275) durch das Durchgangsloch des Isolators (276) und das Durchgangsloch der Mittelplatte (277) hindurchgeht und an die Unterplatte (271) geklebt ist.

7. Kappenanordnung nach einem der vorhergehenden Ansprüche, worin die Elektrodenkontaktfahne (170, 190) eine Mehrkontaktfahnenstruktur ist, die eine Vielzahl von Kontaktfahnen umfasst, die aus einer Vielzahl von Abschnitten der Elektrodenanordnung (100) der Sekundärbatterie gezogen und elektrisch miteinander verbunden werden.

8. Sekundärbatterie, umfassend die Kappenanordnung nach einem der vorhergehenden Ansprüche.

## Revendications

1. Ensemble de capot (270) comprenant :
une plaque de capot (217) ;
une plaque de ventilation (273) qui est localisée au-dessous de la plaque de capot (217), comprenant un moyen de ventilation (275) qui fait saillie vers le bas, et qui est configurée de manière à ce qu'elle soit déformée lorsqu'une pression interne d'une batterie secondaire est augmentée ;
une sous-plaque (271) qui est localisée au-dessous de la plaque de ventilation (273), qui est fixée de façon adhérente au moyen de ventilation (275) et qui constitue un dispositif d'interruption de courant (CID) en association avec la plaque de ventilation (273) ;
une plaque intermédiaire (277) qui est localisée entre la plaque de ventilation (273) et la sous-plaque (271) et qui est connectée électriquement à la plaque de ventilation (273) par l'intermédiaire de la sous-plaque (271) ; et
un isolant (276) qui est localisé entre la plaque de ventilation (273) et la plaque intermédiaire (277) ;
**caractérisé en ce que** la plaque intermédiaire (277) comprend un évidement de réception (277 C) à l'intérieur duquel la sous-plaque (271) est complètement reçue de telle sorte qu'une languette d'électrode (170, 190) qui est dégagée par étirement à partir d'un ensemble d'électrodes (100) de la batterie secondaire et qui est localisée au-dessous de la sous-plaque (271) et de la plaque intermédiaire (277) puisse être fixée de façon adhérente sur à la fois la sous-plaque (271) et la plaque intermédiaire (277) et puisse être connectée électriquement à la plaque de ventilation (273).

2. Ensemble de capot selon la revendication 1, dans lequel l'évidement de réception (277 C) présente une forme concave vers le haut depuis une surface de fond de la plaque intermédiaire (277).

3. Ensemble de capot selon la revendication 2, dans lequel la plaque intermédiaire (277) comprend une partie étagée (S) qui connecte la surface de fond de la plaque intermédiaire (277) à une surface de sommet de l'évidement de réception (277 C) ;
dans lequel une hauteur de la partie étagée (S) est égale ou supérieure à une épaisseur de la sous-plaque (271).

4. Ensemble de capot selon la revendication 3, dans lequel la sous-plaque (271) est fixée de façon étroite à la surface de sommet de l'évidement de réception (277 C).

5. Ensemble de capot selon l'une quelconque des revendications qui précèdent, dans lequel une hauteur de l'évidement de réception (277 C) est égale ou supérieure à une épaisseur de la sous-plaque (271).

6. Ensemble de capot selon l'une quelconque des revendications qui précèdent, dans lequel chacun parmi l'isolant (276) et la plaque intermédiaire (277) comprend un trou traversant ;
dans lequel le moyen de ventilation (275) passe au travers du trou traversant de l'isolant (276) et du trou traversant de la plaque intermédiaire (277) et est fixé de façon adhérente sur la sous-plaque (271).

7. Ensemble de capot selon l'une quelconque des revendications qui précèdent, dans lequel la languette d'électrode (170, 190) est une structure à multiples languettes qui comprend une pluralité de languettes qui sont dégagées par étirement à partir d'une pluralité de parties de l'ensemble d'électrodes (100) de la batterie secondaire et qui sont connectées électriquement les unes aux autres.

8. Batterie secondaire comprenant l'ensemble de capot selon l'une quelconque des revendications qui précèdent.
